# DEMANDE DE BREVET EUROPEEN

(11) **EP 0 784 223 A1**
(43) Date de publication de la demande: **16.07.1997**
(21) Numéro de dépôt: 96410129.9
(22) Date de dépôt: 27.12.1996
(51) Int. Cl.: G02C 1/06

(54) **Oculaire pour lunettes et son procédé et dipositif de fabrication**

(30) Priorité: 05.01.1996 FR 9600182
(71) Demandeur: SGCN, 01460 Montreal La Cluse (FR)
(72) Inventeur: Noyer, Emile, 01160 Neuville-sur-Ain (FR)
(74) Mandataire: Gasquet, Denis

(57) **Abrégé**

Oculaire en matière synthétique pour lunettes comprenant une surface oculaire et une tranche ou bord, caractérisé en ce que au moins les parties de la tranche (3) ou bord devant entrer en contact avec la monture (2) des lunettes sont revêtues par un vernis (4).

## Description

L'invention concerne des oculaires (ou verres) notamment pour lunettes, ainsi que son procédé et dispositif de fabrication.

Elle concerne plus particulièrement des verres organiques pour lunettes comprenant une protection adaptée pour leur fixation sur des montures en matières synthétiques, et un procédé et dispositif pour réaliser cette protection.

Les verres dits "organiques" sont des oculaires réalisés en matières synthétiques. Ces verres, notamment dans le domaine des lunettes pour la protection, par exemple contre le soleil, ont remplacé dans une grande proportion, les verres minéraux. En effet, ils présentent des avantages de légèreté, facilité de découpage et montage, par exemple.

Les matières synthétiques utilisées sont les résines polycarbonate, polyméthacrylate de méthyle, l'acétobutyrate, une résine thermodurcissable de la famille carbonate d'allyle dioglycole commercialisée sous le nom CR39.

La fabrication de ces verres réalisés dans un premier temps par déformation à chaud pour bomber l'oculaire, est maintenant mise en oeuvre par moulage de la résine synthétique. Ce nouveau procédé permet de réaliser des oculaires d'épaisseur et de rayon de courbure constants.

Dans le domaine de l'industrie de la lunette, les lunettes de protection contre les agressions extérieures, soit dans le domaine industriel soit dans la vie courante, se sont largement développées tant d'un point de vue de fréquence d'utilisation que des spécificités techniques requises. Dans ce domaine, les oculaires les plus couramment utilisés sont ceux réalisés en polycarbonate injecté. En effet, cette résine synthétique présente une très bonne transparence et une résistance élevée au choc ou à l'impact d'un projectile.

Toutefois, l'utilisation de ces oculaires, notamment dans le domaine des lunettes de protection solaire est limitée car il apparaît des fissures dans l'oculaire fixé sur des montures en matière synthétique telles que les montures en acétate de cellulose. En effet, les oculaires en polycarbonate injecté présentent des tensions internes qui, sous l'effet de la migration d'un composé étranger, provoquent la fissure du polycarbonate. Dans le cas des lunettes comprenant une monture en matière synthétique et notamment en acétate de cellulose, cette matière contient généralement des additifs permettant de modifier leurs propriétés comme, par exemple, des plastifiants.

Ces composés ont généralement une affinité pour toutes les matières synthétiques. Ainsi, le plastifiant migrera de l'acétate de cellulose constituant la monture, dans le polycarbonate constituant l'oculaire, s'il y a un contact entre ces deux matières.

Pour éviter cette migration, il a déjà été proposé de revêtir la monture par un vernis. Toutefois, cette solution présente l'inconvénient de supprimer les avantages apportés par l'utilisation d'acétate de cellulose. En effet, l'acétate de cellulose est un matériau coloré dans la masse, ce qui permet d'éliminer les rayures réalisées à sa surface par un simple polissage. Cette opération de restauration n'est plus possible quand la monture est revêtue par un vernis protecteur.

Un des buts de la présente invention est de remédier à ces inconvénients en proposant des oculaires comprenant eux-mêmes une protection pour éviter la migration des composés contenus dans la matière formant la monture vers la matière formant l'oculaire, un procédé et un dispositif pour réaliser cette protection.

A cet effet, l'invention propose un oculaire en résine synthétique pour lunettes comprenant une surface oculaire et une tranche ou bord, caractérisé en ce qu'au moins les parties de la tranche ou du bord destinées à venir en contact avec la monture de lunettes sont revêtues par un vernis.

Selon l'invention, ce vernis a une propriété barrière par rapport aux composés contenus dans la matière formant la monture des lunettes, tels que par exemple les plastifiants de la matière synthétique constituant la monture.

Dans un mode de réalisation préféré de l'invention, la matière constituant la monture est de l'acétate de cellulose ou une matière équivalente.

Par ailleurs, la matière constituant l'oculaire est avantageusement une résine polycarbonate.

L'invention concerne également un procédé de fabrication d'un oculaire protégé tel que décrit ci-dessus.

Ce procédé permet de protéger la surface de l'oculaire, de préférence une partie de la tranche du verre, après avoir découpé et conformé l'oculaire à la forme désirée.

En effet, les oculaires sont généralement fabriqués de manière industrielle avec une forme primaire mais avec la courbure désirée. Au cours de cette fabrication ou par traitement ultérieur, des couches protectrices sont déposées sur la surface totale de l'oculaire. Ces couches protectrices sont notamment des vernis anti-rayure, des vernis anti-buée ou analogues.

Ces oculaires sont ensuite découpés à une forme désirée et conjuguée avec la monture associée. Au cours de cette opération, souvent réalisée de manière unitaire, les couches protectrices déposées sur l'oculaire sont éliminées au niveau des surfaces de découpe.

Le procédé de l'invention permet de protéger à nouveau ces surfaces par dépose d'une couche d'un vernis protecteur uniquement sur la surface de découpe, ou au moins une partie de cette surface.

Ce procédé consiste, selon l'invention, à former l'oculaire à une forme désirée adaptée à la monture qui sera associée, puis à enduire la ou les parties de la tranche de l'oculaire devant être mise en contact avec la monture par une couche de vernis, puis à durcir le vernis. Cette enduction est réalisée avantageusement par mise en contact de la surface à enduire avec la surface d'un rouleau d'enduction.

Comme vernis de protection on peut citer à titre d'exemple le vernis polyuréthanne et polysiloxan.

Ce vernis peut être appliqué à l'état pur ou sous forme d'une solution ou émulsion. La couche de vernis est durcie avantageusement pendant le séchage par évaporation du solvant et/ou par polymérisation, réticulation du vernis.

L'invention a également pour objet un dispositif pour la mise en oeuvre du procédé décrit ci-dessus.

Ce dispositif permet de traiter toute les formes d'oculaire par une adaptation très simple, et donc peut être utilisé de manière industrielle, mais également par un artisan tel que l'opticien.

Selon l'invention, le dispositif se caractérise en ce qu'il comprend :
- unun moyen de support d'au moins un oculaire à traiter associé à un moyen pour la mise en rotation dudit oculaire,
- un rouleau d'enduction dont la surface peut être mise en contact avec la tranche de l'oculaire précité et,
- un moyen pour mettre et maintenir en contact la tranche dudit oculaire et le rouleau d'enduction pendant au moins la rotation dudit oculaire.

Selon un premier mode de réalisation de l'invention, le moyen pour mettre et maintenir en contact la tranche de l'oculaire à traiter et le rouleau d'enduction, comprend notamment un gabarit de forme identique à celle de l'oculaire à traiter et supporté de manière équivalente et coaxialement audit oculaire.

Selon ce premier mode de réalisation, comme cela apparaîtra clairement au vu de la description détaillée donnée ci-après, le contrôle de l'application du vernis sur l'oculaire est aisément réalisé par contrôle de l'application de la tranche du gabarit sur le rouleau d'application. Cette caractéristique permet également de traiter une série d'oculaires sans réglage du dispositif. En outre, ce réglage est facilement réalisé par remplacement du gabarit par un gabarit de forme adaptée.

Dans une variante, la mise en contact de l'oculaire avec le rouleau d'enduction peut être réalisée par pivotement du support de l'oculaire à traiter autour d'un axe ou tige de support, ou pivotement de l'axe de support du rouleau d'enduction.

Les oculaires ainsi enduits sont déposés ou amenés de manière automatique ou non dans une zone de séchage pour provoquer le durcissement du vernis.

Cette zone de séchage peut être une enceinte chauffée, éventuellement ventilée, ou elle peut comprendre une alimentation d'air chauffé dirigée vers la surface enduite de l'oculaire, ou un système pour amorcer la polymérisation ou réticulation du vernis, tel qu'une source de rayonnements U.V.

Selon un deuxième mode de réalisation du dispositif, il comporte une enceinte de séchage, un dispositif d'enduction muni d'un rouleau d'enduction et un chariot porte-oculaire comportant un bras mobile muni d'un organe porte-oculaire.

Selon une caractéristique de ce deuxième mode de réalisation le dispositif d'enduction comporte le rouleau d'enduction qui est immergé en partie dans un réservoir de vernis et des moyens de régulation de l'épaisseur de vernis présent sur le rouleau d'enduction.

Selon une autre caractéristique, les moyens de régulation sont constitués par un rouleau régulateur.

De plus, le rouleau d'enduction comporte un revêtement en silicone.

Selon une autre caractéristique, le bras porte-oculaire est mobile entre une position de chargement et une position d'enduction, la tranche de l'oculaire pénétrant dans le revêtement de silicone du rouleau d'enduction lorsque le bras porte-oculaire est une position d'enduction.

Selon ce deuxième mode de réalisation, l'axe de rotation du moyen de support de l'oculaire forme un angle Â non nul avec l'axe de rotation du rouleau d'enduction.

D'autres avantages et détails de l'invention apparaîtront plus clairement au vu de la description détaillée d'un mode de réalisation du dispositif de l'invention faite en référence aux figures annexées, dans lesquelles :
- la figure 1 est une vue en perspective représentant une paire de lunettes équipée des oculaires selon l'invention,
- la figure 2 est une vue en coupe d'un oculaire selon l'invention.
- la figure 3 est une vue schématique en perspective d'un premier mode de réalisation d'un dispositif destiné à mettre en oeuvre le procédé de réalisation de l'oculaire conforme à l'invention.
- la figure 4 est une vue schématique en coupe illustrant le montage de l'oculaire sur la monture.
- Les figures 5a, 5b, 5c et 6 illustrent un deuxième mode de réalisation d'un dispositif destiné à mettre en oeuvre le procédé précité durant trois stades dudit procédé.

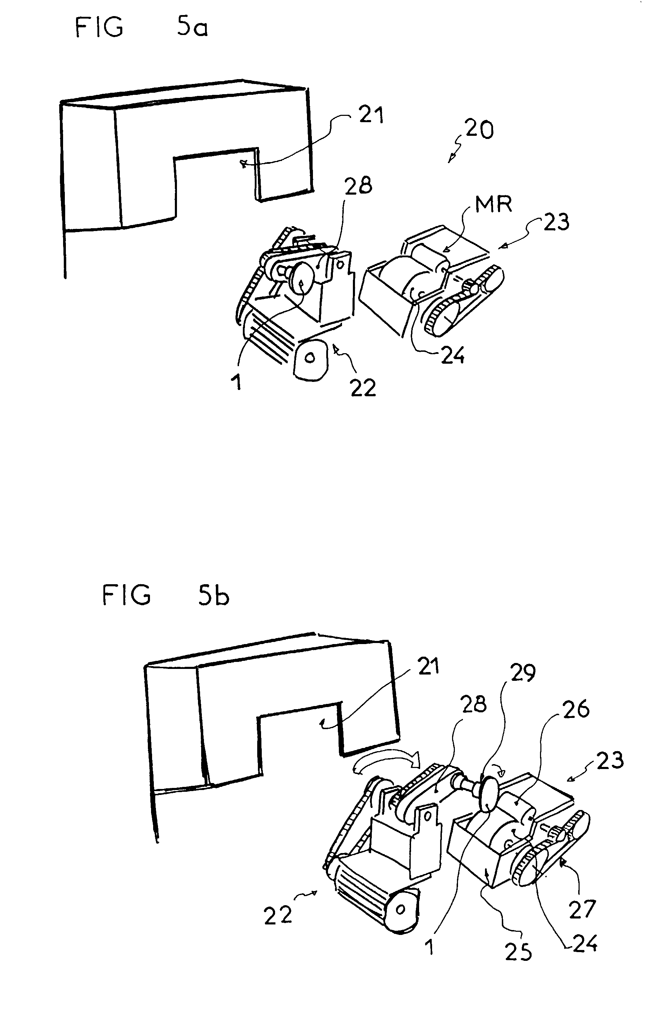

- La figure 5a illustre en perspective la position de repos du dispositif correspondant au chargement et au déchargement de l'oculaire à venir.
- La figure 5b illustre en perspective la position active d'enduction du dispositif.
- LaLa figure 5c illustre en perspective la position de séchage ou de réticulation du vernis.

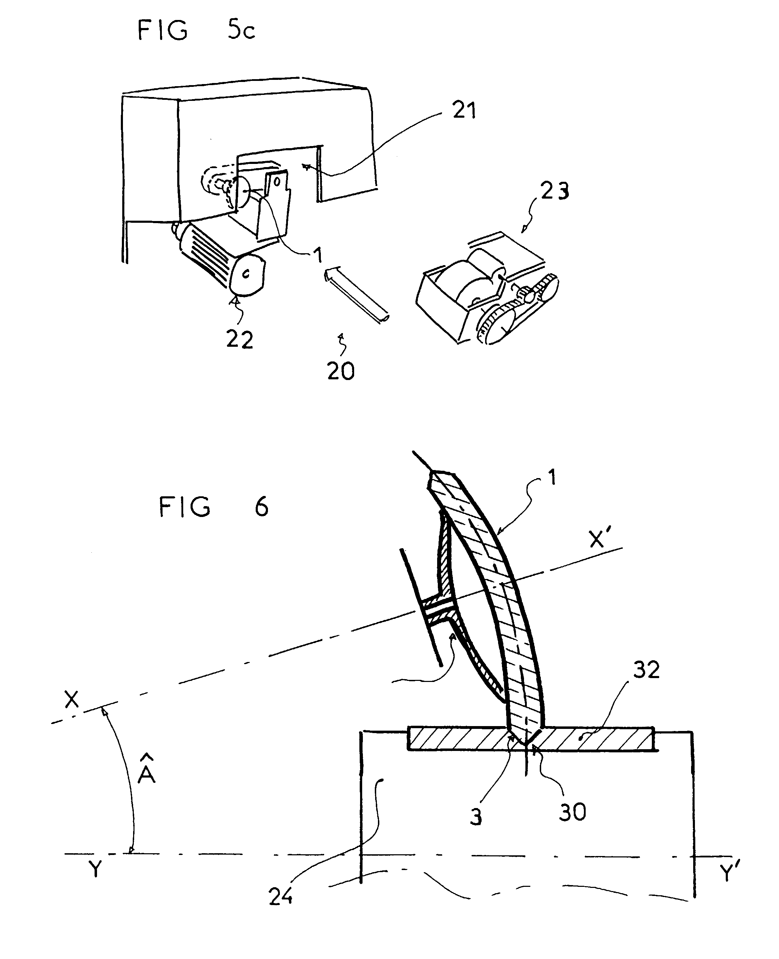

- La figure 6 est une vue en coupe transversale de l'oculaire et du rouleau d'enduction en position active d'enduction.

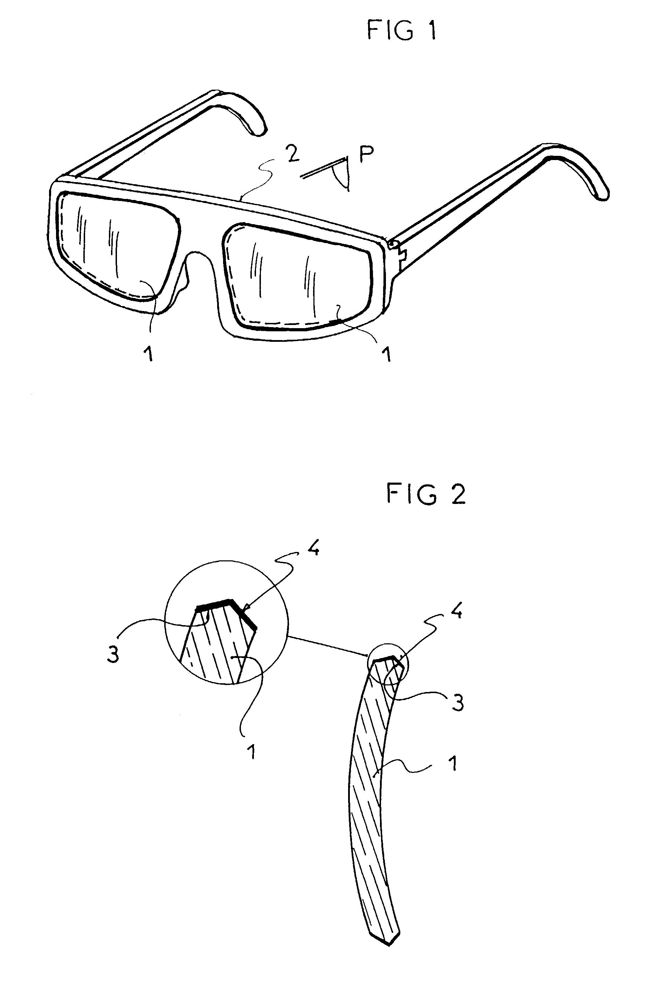

La figure 1 illustre en perspective une paire de lunettes équipée d'oculaires selon l'invention. Ladite paire de lunettes est, de façon connue en soi, constituée d'une monture (2) comprenant deux oculaires (1a, 1b).

Un oculaire (1) pour lunettes, notamment pour lunettes de protection par exemple contre le soleil, est formé par moulage d'une matière synthétique, par exemple du polycarbonate, selon une épaisseur et une courbure du verre déterminées, comme représenté schématiquement à la figure 2

Comme indiqué précédemment, l'oculaire (1) peut être revêtu par des couches de matières protectrices (non représentées) telles qu'une couche derésine anti-rayure.

L'oculaire est destiné à être monté ou fixé sur une monture (2). Pour adapter la forme de l'oculaire à la monture, l'artisan lunetier ou l'opticien découpe le verre fabriqué industriellement. Ainsi, la tranche (3) de l'oculaire dont une partie sera en contact avec la monture (2) n'est plus revêtue par le vernis anti-rayure. L'oculaire est réalisé en matières synthétiques du type polycarbonate, polyméthacrylate de méthyle, voire en acétobutyrate ou autre, et sa tranche (3) est selon l'invention revêtue d'une couche de vernis (4) destinée à faire obstacle aux migrations éventuelles provenant des matériaux constituant la monture. Notons que seule la partie de la tranche en contact avec la monture peut être revêtue par le vernis. On notera, par ailleurs et comme cela a déjà été décrit en préambule, que l'oculaire selon l'invention est plus particulièrement adapté pour être monté sur une monture (2) en acétate de cellulose.

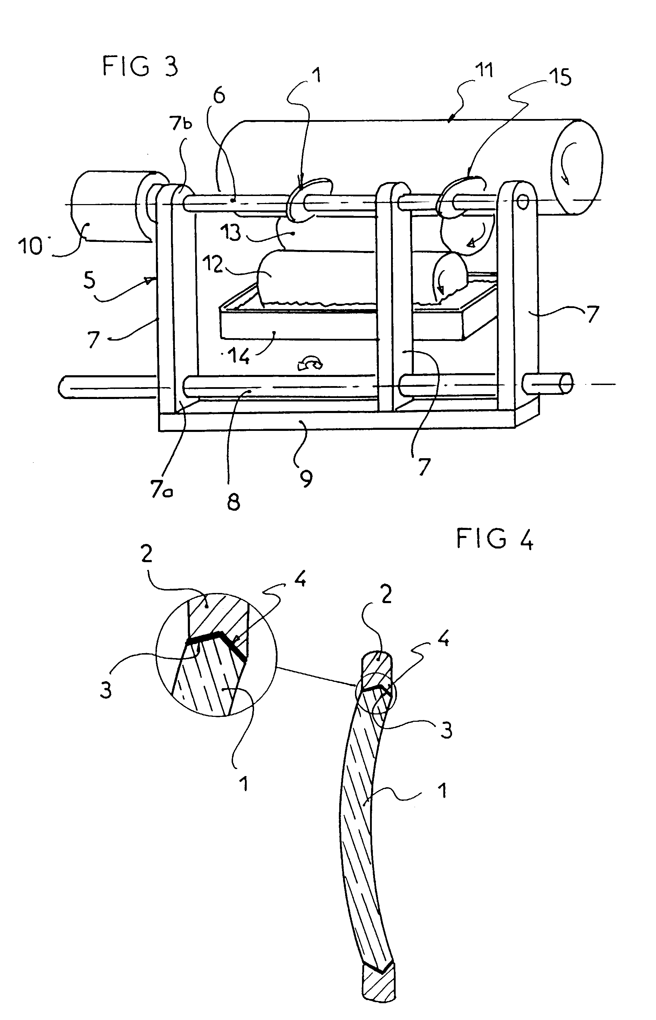

L'invention propose un procédé et un dispositif destiné à mettre en oeuvre le procédé, dont un mode de réalisation sera décrit ci-dessous en référence à la figure 3, permettant notamment à l'artisan lunetier ou à l'opticien de protéger efficacement la tranche ou surface de coupe par dépôt d'une couche de vernis protecteur (4). Ainsi l'oculaire (1) est fixé sur la monture (2) sans contact direct entre le matériau constituant l'oculaire, par exemple le polycarbonate, et le matériau formant la monture, par exemple l'acétate de cellulose, et ce, grâce au vernis protecteur.

Un premier mode de réalisation d'un dispositif pour la mise en oeuvre du procédé de l'invention comprend un support (5) destiné à maintenir au moins un oculaire (1). Ce support (5) comprend un arbre (6) monté libre en rotation sur une extrémité (7b) de bras (7), eux-mêmes montés sur l'autre extrémité (7a) sur une tige ou axe support (8). Les bras (7) et l'arbre (6) constituent un ensemble solidaire qui peut pivoter autour de l'axe support (8), et dans un mode de réalisation, être déplacé longitudinalement sur la longueur de l'axe support (8). Pour renforcer la solidité de l'ensemble formé par les bras (7) et l'arbre (6), les extrémités (7a) des bras (7) sont fixées sur un élément de liaison (9).

L'arbre (6) est entraîné en rotation par un moteur (10), tandis qu'il est formé de plusieurs parties ou éléments, constitués par des tiges coulissantes qui sont maintenues en contact l'une de l'autre par un système de ressorts. Ainsi, par écartement des tiges coulissantes, l'oculaire (1) à traiter est disposé entre les extrémités de ces tiges. Sous l'effet des ressorts, les deux tiges coulissantes maintiennent fermement entre leurs extrémités l'oculaire (1).

Les extrémités des tiges coulissantes peuvent également comprendre un dispositif de maintien positif de l'oculaire comme par exemple une extrémité formant ventouse sur la surface de l'oculaire, ou tout autre moyen analogue. Le dispositif de l'invention comprend un rouleau d'enduction ou encreur (11) monté en rotation libre sur un axe fixé sur un bâti support (non représenté). La surface de ce rouleau (11) peut être en un matériau quelconque capable de retenir un liquide pour pouvoir l'appliquer sur une autre surface.

Le rouleau (11) est destiné à entrer en contact avec la tranche (3) de l'oculaire (1) à traiter, soit par pivotement automatique ou manuel de l'ensemble formé par les bras (7), l'axe (6) et l'élément de liaison (9), soit par déplacement de l'axe supportant le rouleau (11).

Avantageusement, dans ce premier mode de réalisation illustré, le rouleau d'enduction (11) est enduit lui-même de vernis par un système de transfert comprenant deux autres rouleaux (12) et (13) montés en rotation sur des axes associés parallèles à l'axe support du rouleau (11), et montés avantageusement sur le bâti support de l'axe du rouleau (11).

Le premier rouleau (12) appelé également rouleau de prise de vernis, est immergé partiellement dans le vernis ou la solution de vernis contenu dans un bac (14). Le second rouleau (13) est disposé entre les deux rouleaux (11, 12) pour permettre le transfert du vernis depuis la surface du rouleau (12) vers le rouleau (11).

Ces rouleaux (11, 12 et 13) sont entraînés en rotation. Ainsi, un des ces trois rouleaux est avantageusement entraîné en rotation par tout moyen convenable, tel qu'un moteur électrique (non représenté), les autres rouleaux sont également mis en rotation par frottement.

Une telle disposition de trois rouleaux permet de déposer sur le rouleau d'enduction (11) un film de vernis d'épaisseur régulière et donc de réaliser une enduction régulière de l'oculaire (1).

Bien entendu, d'autres modes de réalisation peuvent être envisagés, comme par exemple d'utiliser un seul rouleau (11) partiellement immergé dans le bac (4) contenant le vernis, le contrôle de l'épaisseur de la couche de vernis sur la surface du rouleau pouvant être réalisé par un système de raclette disposée sur la surface dudit rouleau.

L'oculaire à enduire étant disposé sur le support (5) et mis en rotation, il est amené en contact avec la surface du rouleau (11) par simple pivotement de l'ensemble bras (7), support (5) autour de l'axe de support (8).

Après enduction de la tranche de l'oculaire (1) ou simplement une partie de cette tranche, l'oculaire est, soit enlevé du support pour être disposé dans une enceinte de séchage ou réticulation du vernis (non représentée), soit par simple translation longitudinale de l'ensemble des bras (7) et du support (5) sur l'axe support (8), amené dans une enceinte de séchage, polymérisation ou réticulation du vernis. Avantageusement, la polymérisation ou réticulation du vernis est réalisée au moyen d'une source de rayonnements U.V.

L'oculaire est alors prêt à être fixé sur la monture.

Dans le premier mode de réalisation illustré à la figure 3, le rouleau (11) d'enduction a une longueur supérieure à la longueur des rouleaux (12, 13) de prise de vernis et de transfert. Ainsi, le rouleau (11) présente une partie (11a) de sa surface non enduite de vernis.

L'axe support (6) est également prolongé pour venir au droit de la surface non enduite du rouleau (11). L'extrémité de cette prolongation de l'axe support (6) est montée en rotation sur l'extrémité d'un troisième bras (7), dont l'autre extrémité est montée coulissante sur la tige support (8), et reliée à l'élément de liaison (9).

La prolongation de l'axe (6) -comprend également deux éléments de tige coulissants dont les extrémités opposées sont maintenues en contactl'une de l'autre par un système de ressort.

Un gabarit (15) peut être maintenu entre les extrémités de ces deux demi-tiges, de manière analogue à l'oculaire (1) à traiter.

Le gabarit (15) a une forme identique à celle de l'oculaire (1) à traiter et permet de contrôler plus facilement le pivotement de l'ensemble des bras (7) et axe (5) pour amener simultanément le gabarit (15) et l'oculaire (1) en contact avec la surface du rouleau d'enduction.

Le gabarit (15) et l'oculaire (1) sont entraînés simultanément et coaxialement en rotation par le moteur (10).

Par ailleurs, comme le gabarit est en contact avec une surface non enduite du rouleau (11), il permet d'entraîner le rouleau (11) qui est monté libre en rotation, à une vitesse correspondant à la vitesse périphérique de rotation du verre ou du gabarit, cette vitesse étant fonction du rayon de courbure de la tranche du verre. Ainsi, ce contrôle de la vitesse du rouleau (11) par le frottement de sa partie sèche sur le gabarit permet d'éviter un glissement de la tranche (3) de l'oculaire (1) sur la surface du rouleau (11), engendrant une irrégularité dans l'épaisseur de la couche (4) de vernis déposée.

Le mode de réalisation décrit est donné uniquement à titre d'exemple. C'est ainsi que le système de maintien de l'oculaire, le système d'alimentation du vernis sur le rouleau peuvent être modifiés sans pour cela sortir du cadre de l'invention.

Ainsi selon un deuxième mode de réalisation du dispositif destiné à mettre en oeuvre le procédé de fabrication selon l'invention, le dispositif (20) illustré figures Sa, 5b et 5c comporte une enceinte de séchage (21), un chariot porte oculaire (22) et un dispositif d'enduction (23). Le dispositif d'enduction (23) comprend un rouleau d'enduction (24) immergé dans sa partie inférieure dans un réservoir de vernis (25). Ledit rouleau est avantageusement revêtu par une couche de silicone (32) d'épaisseur relativement faible. Par ailleurs, le dispositif d'enduction (23) comporte des moyens de régulation (MR) de l'épaisseur de vernis présente sur le rouleau d'enduction, lesdits moyens pouvant être avantageusement constitués par un rouleau régulateur (26) en contact permanent avec le rouleau d'enduction selon une génératrice des deux rouleaux (24, 26). En outre, un dispositif de motorisation et de transmission (27) est prévu afin que les deux rouleaux aient le long de ladite génératrice une vitesse tangentielle identique, ladite motorisation et transmission pouvant être obtenue grâce à un moteur non représenté et une courroie crantée coopérant avec deux pignons solidaires chacun d'un rouleau.

Selon ce deuxième mode de réalisation, le chariot porte-oculaire (22) comporte un bras porte-oculaire (28) mobile entre deux positions, une position d'enduction illustrée figure 5b et une position de chargement et de séchage illustrée figures 5a et 5c. Ledit bras (28) comporte un organe porte-oculaire (29) à son extrémité, avantageusement constitué par une ventouse commandée en rotation par un moteur et un dispositif de courroie dudit chariot. Ladite ventouse fonctionnant grâce à un système de dépression et de remise à la pression externe connu en soi.

Notons, comme le montre la figure 6, que lorsque le bras mobile est en position d'enduction, la surface de découpe ou tranche (3) de l'oculaire (1) en forme de biseau (30) pénètre entièrement dans le revêtement en silicone (32) du rouleau d'enduction et que, de plus, celui-ci pénètre orthogonalement dans ledit revêtement. Notons également que l'axe de rotation (XX') de l'organe porte-oculaire (29) forme un angle Â non nul avec l'axe de rotation (YY') du rouleau d'enduction (24) comme le montre la figure 6.

Le chariot porte-oculaire (22) est mobile en translation selon un axe non représenté afin de permettre le séchage de l'oculaire enduit dans l'enceinte de séchage. Ainsi, le procédé de fabrication utilisant ce dispositif comporte une première étape de chargement consistant à positionner un oculaire (1) sur le porte-oculaire (29) lorsque le bras mobile (28) est en position de chargement (figure Sa), une deuxième étape consiste à faire pivoter le bras mobile en position d'enduction afin d'enduire de vernis la tranche (3) de l'oculaire (1) grâce à la rotation respective de l'oculaire (1) et du rouleau d'enduction (24) tel qu'illustré figure 5b. La troisième étape du procédé est l'étape de séchage où le chariot (22) permet en se déplaçant l'introduction de l'oculaire (1) dans l'enceinte de séchage (21), comme le montre la figure 5c. Le déchargement s'effectue ensuite dans une position similaire à la position de chargement pour le dispositif.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Oculaire en matière synthétique pour lunettes comprenant une surface oculaire et une tranche ou bord, caractérisé en ce que au moins les parties de la tranche (3) ou bord devant entrer en contact avec la monture (2) des lunettes sont revêtues par un vernis (4).

2. Oculaire selon la revendication 1, caractérisé en ce que le vernis a une propriété de barrière par rapport aux composants contenus dans le matériau constituant la monture.

3. Oculaire selon la revendication 2, caractérisé en ce que la matière synthétique le constituant est un polycarbonate.

4. Oculaire selon l'une quelconque des revendications 1 à 3, caractérisé en ce que le vernis (4) est du type polyuréthanne ou polysiloxan.

5. Lunettes constituées par les oculaires selon les revendications 1 à 4, caractérisées en ce que les composants contenus dans le matériau constituant la monture sont des plastifiants.

6. Lunettes selon la revendication 5, caractérisées en ce que le matériau constituant la monture est à base d'acétate de cellulose.

7. Procédé de fabrication de verre ou oculaire selon l'une quelconque des revendications 1 à 4, caractérisé en ce qu'il consiste à :
- former l'oculaire (1) à une configuration pour le montage sur une monture de lunettes (2),
- enduire la ou les partie(s) de la tranche (3) de l'oculaire (1) devant entrer en contact avec la monture par une couche de vernis (4).

8. Procédé selon la revendication 7, caractérisé en ce que l'enduction est réalisée par contact avec un rouleau d'enduction (11) d'un dispositif destiné à mettre en oeuvre le procédé.

9. Dispositif pour la mise en oeuvre du procédé selon la revendication 7 ou 8, caractérisé en ce qu'il comprend :
- un moyen de support d'au moins un oculaire (1) à traiter et un moyen de mise en rotation dudit oculaire,
- unun rouleau d'enduction (11, 24) dont la surface peut être mise en contact avec la tranche (3) de l'oculaire (1) à traiter,
- un moyen pour mettre et maintenir en contact la tranche de l'oculaire et le rouleau d'enduction (11, 24) pendant la rotation de l'oculaire (1).

10. Dispositif (20) selon la revendication 9, caractérisé en ce qu'il comporte une enceinte de séchage (21), un dispositif d'enduction (23) muni d'un rouleau d'enduction (24) et un chariot porte-oculaire (22) comportant un bras mobile (28) muni d'un organe porte-oculaire (29).

11. Dispositif (20) selon la revendication 10, caractérisé en ce que le dispositif d'enduction comporte le rouleau d'enduction (24) qui est immergé en partie dans un réservoir de vernis (25) et des moyens de régulation (MR) de l'épaisseur de vernis présent sur le rouleau d'enduction (24).

12. Dispositif (20) selon la revendication 11, caractérisé en ce que les moyens de régulation (MR) sont constitués par un rouleau régulateur (26).

13. Dispositif (20) selon l'une quelconque des revendications 10 à 12, caractérisé en ce que le rouleau d'enduction (24) comporte un revêtement en silicone (32).

14. Dispositif (20) selon la revendication 13, caractérisé en ce que le bras porte-oculaire (28) est mobile entre une position de chargement et une position d'enduction, la tranche (3) de l'oculaire (1) pénétrant dans le revêtement de silicone (32) du rouleau d'enduction (24) lorsque le bras porte-oculaire est une position d'enduction.

15. Dispositif (20) selon l'une quelconque des revendications 9 à 14, caractérisé en ce que l'axe de rotation (XX') du moyen de support de l'oculaire (1) forme un angle Â non nul avec l'axe de rotation (YY') du rouleau d'enduction (24).
